# EUROPEAN PATENT SPECIFICATION

(11) **EP 0 529 155 B1**
(45) Date of publication and mention of the grant of the patent: **25.09.1996**
(21) Application number: 91202406.4
(22) Date of filing: 22.08.1991
(51) Int. Cl.: G01N 27/42

(54) **Anodic stripping voltammetry**
Anodische Strip-Voltamperemetrie
Voltamétrie de dépouillage anodique

(43) Date of publication of application: 03.03.1993
(73) Proprietor: Secretary of State for Defence in Her Britannic Majesty's Gov. of the United Kingdom of Great Britain and Northern Ireland, London SW1A 2HB (GB)
(72) Inventor: Dobson, John Vincent, Hartlepool, Cleveland TS27 4SA (GB)
(74) Representative: Beckham, Robert William

(56) References cited:
- WO-A-87/03624
- GB-A- 1 539 393
- GB-A- 2 117 120
- US-A- 3 904 487

## Description

The present invention relates to improvements in anodic stripping voltammetry (ASV) and in particular to anodic stripping continuous recall enhancement voltammetry (ASCREV).

The concept behind anodic stripping voltammetry (ASV) and also cathodic stripping voltammetry is the electrochemical accumulation via deposition of ionic or molecular species from a solution sample, at a conducting substrate, followed by the application of a reversal of current to remove the species from the conducting substrate. Each species has a range of stripping potential over which it is removed from the substrate, with the removal generating a current in the process. The individual potential ranges form the basis for discrimination between species whilst the magnitude of dissolution, in terms of the current or charge passed in the process can be used to give a measure of the concentration of the ionic species originally in the sample. Whilst ASV and related electrochemical techniques are used mainly for the determination of species in aqueous media, the technique may also be applied in other media provided that the media possesses sufficient conductivity.

Improvements to this basic technique have led to developments such as that described in UK Patent 2,117,120B which describes an ASCREV voltammeter adapted for measurements on continuously flowing samples.

In this case a single flow-through sample cell is adopted and the potential of a working electrode in contact with the flowing sample is repetitively cycled to produce the required deposition and dissolution cycles upon the electrode. Particular species are detected and their concentration determined by measuring the dissolution current over a scanned potential range or window. The sensitivity of this system is improved by integrating the dissolution current over the potential window. This approach can yield results with a sensitivity of ppm levels for ionic species. It cannot however to used for molecular species detection. For certain applications it is desirable that the degree of sensitivity of ASCREV and other similar electrochemical detection techniques should be increased to a ppb level or better.

Moreover because certain species have ranges of potential for dissolution which overlap there exists the possibility of interference and consequent inaccuracies where two or more species are stripped from the electrode within a chosen potential window.

Yet further problems with techniques prior to the present invention are difficulties in taking account of variations in pH and dissolved oxygen concentration between samples.

These latter problems are usually overcome by using buffers to stabilise pH and degassing oxygen from solution by bubbling an inert gas such as nitrogen through the sample. Even with such laborious precautions errors can occur.

Consequently the aim of the present invention is to provide an anodic stripping voltammeter which overcomes or at least mitigates the above disadvantages.

Accordingly there is provided a continuous flow anodic or cathodic stripping voltammeter for the detection of ionic or molecular species in a sample which comprises:
a) means to separate the sample into at least two sample streams;
b) a flow-through sample cell through which a sample stream flows;
c) a working electrode and counter electrode within the cell;
d) means for cycling the working electrode potential repetitively to produce successive deposition/dissolution cycles; and
e) means for detecting the dissolution current over a potential range characteristic of a particular ionic or molecular species of interest characterised in that the voltammeter further comprises;
a second similar flow-through sample cell through which a second sample stream comprising (c) - (e) wherein there is provided means prior to the sample entering the second flow-through sample cell to remove the ionic or molecular species of interest and electrical means to compare the signals measured by the two cells.

This type of voltammeter design enables a differential approach to the detection of ionic or molecular species to be adopted. The term species or species of interest as used herein is intended to include both ionic and molecular species as the present invention is capable of determination of species which are either completely or partially ionised. The term anodic when used in relation to stripping voltammetry herein should also be taken to imply cathodic as well. With the present invention the concentration of oxygen and pH in both cells will be the same at any one time and when used differentially no account needs to be taken of them. The first cell will give a reading of the concentration of a species inclusive of the effects of oxygen present in the sample and pH etc. The second cell sample has the same concentration of oxygen in the sample and the same pH but does not contain the species. Consequently subtraction of the readings produced by the second cell from those of the first cell gives the concentration of species which were in the sample.

Ideally, each cell further includes a reference electrode. The reference electrode gives an indication of the working electrode potential. Preferably the second sample cell is set up in parallel flow with the first sample cell.

Whilst the invention has been referred to above with two cells which enables the continuous analysis for one species it will be appreciated that the simultaneous analysis of further species can be achieved by the addition of further cells, one for each additional species.

Conveniently the means to remove the species of interest is a resin filled column. Various other suitable deionisers and molecular traps such as zeolites will be familiar to those skilled in the art.

Preferably, the continuous stripping voltammeter further comprises means to subject the portion of the sample passed through the resin column or other ionic or molecular species removal means to electrochemical polishing. This technique, applied prior to the sample cell, utilises an electrode system to electrochemically adhere any of the residual ionic or molecular species which pass through the resin column or equivalent means.

Preferably the working electrode in both sample cells is formed as a thin film mercury covered substrate. Conventional thin film electrodes have a lifetime of only about 8 hours. Preferably, the continuous stripping voltammeter comprises means capable of introducing mercury or mercuric salts into the sample. The inventor has found that he can produce working electrodes with a replenished thin film mercury surface on deposition cycles by introducing mercury or mercuric salts with the sample. Consequently as the working electrodes undergo a deposition cycle mercury from solution is deposited on the electrodes. Any other species in the sample is then deposited on the fresh mercury surface. When the working electrodes undergo the dissolution cycle the mercury ions are the last to be removed from the electrodes.

This aspect of the invention therefore produces a good electrode surface at any stage of operation and even after the apparatus has been left dormant for long periods. Mercury as the electrode layer is particularly useful as mercury has the highest hydrogen over potential of any substrate and therefore can be used in the deposition of virtually all electroactive species.

The mercury or mercuric salt solution is preferably added to the sample portion entering the second cell after the resin packing and optionally after the electrochemical polishing electrode to ensure there is mercury present in solution to replenish the electrode surface. The mercury or mercuric salt can be added to the sample in various ways such as from a reservoir. One preferred approach is to deposit mercury or a mercuric salt on the inside of the vessels used in transporting the sample. The mercury or mercuric salt is thus added as the sample flows through the vessels. The rate or amount of mercury or mercuric salt added can be determined by application of established mass transport principles.

Various substrates can be used for the working electrode and these include glassy carbon, boron nitride, tungsten/bronze and NAF-ion which is a solid polymer electrolyte.

Preferably the electrode potentials are controlled by potentiostats. Preferably there is further included a single waveform generator which applies voltages to the electrodes to ensure synchronism of potential between the electrodes at any time.

Preferably, the continuous stripping voltammeter further comprises means to add selected ligands to the sample. The inventor has found that the performance of the apparatus for detecting species can be improved with the addition to the sample of ligands which complex with the ionic species and to some extent with the mercury of the electrodes. Thus in the process of adsorption this increases the sensitivity of the system by tipping the balance of competition for the mercury electrode between ionic species and other species especially water for the electrode in favour of the ionic or molecular species. Preferably the ligands are used in low concentration in the sample medium. Where sea water or other aqueous samples are under investigation then pyrocatechol violet or methylene blue may be useful especially where the species of interest in the sample is tin. Gallic acid has also been found to be a good ligand for tin. A further advantage of using ligands is that interference between species having measurement windows which overlap can be prevented. Adding a ligand which specifically binds one of the interfering species has the effect of changing the potential range over which the species is stripped from the electrode. Copper and Bismuth are two elements which interfere in this way and, using a ligand such as EDTA (ethylene diamine tetraacetic acid) which complexes with copper, moves the stripping potential of the copper complex either up or down field of its usual non-complexed potential.

The ligands can be added by various means such as by pipes from reservoirs but conveniently ligands are added by deposition on the inside of the sample transport vessels.

Preferably narrow bore tubes are used to transmit the sample to and from the sample cells with the output of the two cells linked prior to one, or subsequent to two flow meters. Preferably capillary tubes are used in the transmission of mercury/mercuric salt and ligand to the cells. The use of capillary tubes affords regulation over the addition of ligand and mercury/mercuric salt to the sample solution. Furthermore it is possible with use of these capillary tubes to maintain a sample flow rate which exceeds a minimum requirement whilst keeping variations in flow rate to a low level. Flow in excess of a minimum flow rate is required for correct sensitivity with the flow rate of sample being determined to an extent by the voltage sweep rate which is used and vice versa. Conveniently a pump, and preferably a micro pump is placed in-series after the flow meter(s) to draw the sample inclusive of mercury and any ligands through the apparatus.

The present invention may be used for the quantitative determination of various species in a sample including inorganic ions such as metal ions (tin, lead, cadmium etc) but also organic molecular species such as herbicides and pesticides. The detection of organic species will typically involve the use of cathodic stripping rather than anodic stripping. For example it is necessary that the organic species has some inherent electrochemical activity such as a double bond which way be reduced, or that may be complexed, oxidised or adsorbed preferentially.

The apparatus of the present invention is capable of operation in various modes.

In one mode measurements are first taken only from samples passing through the first cell and the second cell (background noise cell) measurements are not used. By measuring the current produced by this cell over the entire potential range that is scanned it is possible to obtain an element abundance pre-scan which will indicate the species present and give approximate values for the concentration of those species.

An alternative mode of operation would involve the first sample cell being used as a conventional ASCREV system as described above.

A further mode of operation is the adsorptive mode. In this case it is preferable to use both sample cells for achieving accuracy. In keeping with the ASCREV technique described above a voltage range or window is chosen over which the current produced is measured, the current produced in the window being indicative of a particular species. Because both sample cells are utilised differential analysis is possible with the attendant advantages already mentioned.

In a further embodiment and especially applicable to the adsorptive mode the means for cycling the working potential imposes over part of the voltage window a wave of small amplitude, typically about 100mV. When the cycling voltage reaches the start of the window a comparator is triggered, current measurement begins, and the small amplitude wave (typically a square wave) is imposed. The imposed wave has the effect of greatly increasing the sweep rate and consequently the current output for a Faradic process. However this detrimentally affects the performance because of increased non-Faradic capacitance effects which arise from the interfacial charging between the substrate and species in solution in the Helmholtz layer region.

The unwanted effect of capacitance charging is overcome by switching off the imposed wave before the end of the potential window is reached. Thus the non-Faradic capacitance is allowed to decay almost completely and consequently it is possible to enhance the discrimination between the current from the non-Faradic capacitance imposed. Faradic process and the current due to the non-Faradic capacitance which occurs when the small amplitude wave is imposed.

Moreover it has also been found that the differential two cell technique of the present invention helps also to take account of any residual capacitance effects in the system.

According to a further aspect of the present invention there is provided a method for detecting the presence and concentration of a particular ionic or molecular species in a continuously flowing solution which comprises:
(a) separating the solution into at least two sample streams;
(b) passing a sample stream through a first sample cell within which there is provided a working electrode;
(c) repetitively cycling a voltage applied to the electrode to produce deposition and dissolution or various other processes for the various ionic or molecular species upon the electrode;
(d) measuring the current produced by dissolution or removal of an ionic or molecular species over a selected potential range of the voltage cycle;
characterised in that
a second sample stream is fed through a second similar sample cell in which a repetitively cycled potential is applied to a working electrode to produce deposition and dissolution of ionic or molecular species present upon the electrode and measuring the dissolution current over the same potential range as in the first cell, the particular ionic or molecular species having been removed from the second portion of the sample stream prior to entering the sample cell, the concentration of the particular ionic or molecular species being determined by a process involving subtracting the dissolution current of the second cell that of the first sample cell.

Various embodiments of the present method will be apparent from the foregoing apparatus description.

The invention will now be described by way of example only and reference to the accompanying drawings of which:
Figure 1 shows a representation of a twin flow-through sample voltammeter according to the invention:
Figure 2 shows a differential pulsed anodic stripping continuous recall enhancement voltammeter (ASCREV) waveform; and
Figure 3 shows a schematic diagram of a twin flow-through sample cell voltammeter of the type shown in Figure 1.

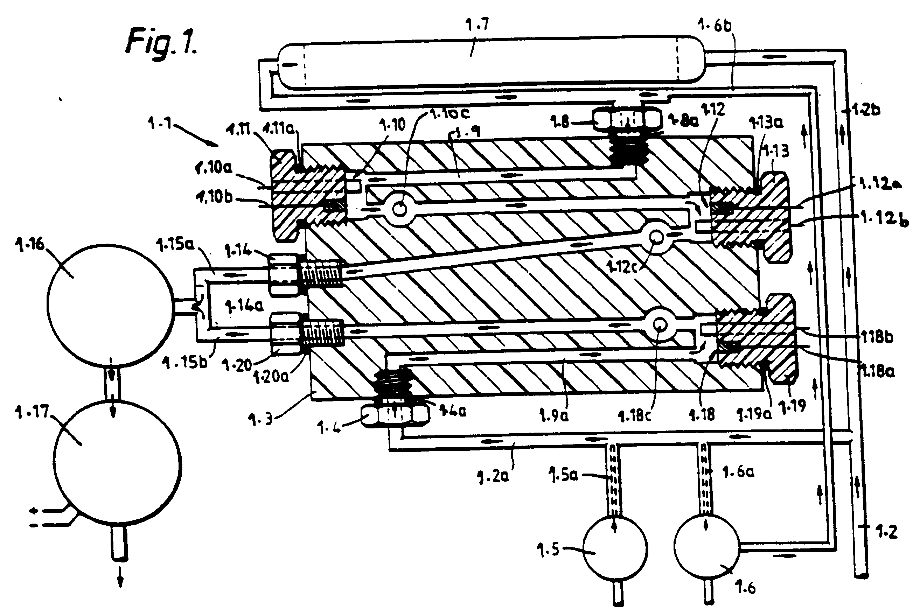

With reference to Figure 1 a twin flow-through sample cell voltammeter for sea water analysis comprises a narrow bore tube 1.2 made from Perspex (Registered Trade Mark) for conveying sea water to the voltammeter 1.1, the direction of sea water flow represented by the arrows shown. The narrow bore tube 1.2 branches in two producing narrow bore tubes 1.2a & 1.2b also made of Perspex (Registered Trade Mark). Tube 1.2a is attached to the outside of sample cell block 1.3 which is formed of Perspex (Registered Trade Mark) by a hollow threaded connector. A rubber sealing ring 1.4a positioned between the head of the connector 1.4 and cell block 1.3 prevents leakage of sea water from the joint.

A reservoir 1.5 containing Gallic acid and reservoir 1.6 containing Hg⁺⁺ ion are connected via respective capillary tubes 1.5a and 1.6a to tube 1.2a. Tube 1.2b is connected to a resin packed column 1.7 of enlarged bore, the output of which is connected to the outside of cell block 1.3 by hollow threaded connector 1.8 with rubber sealing ring 1.8a positioned as above.

A capillary inlet 1.6b between column 1.7 and cell block 1.3 is fed with Hg" ion from reservoir 1.6. A narrow bore conduit 1.9 within the sample cell block 1.3 leads from connector 1.8 to an electrode assembly 1.10. The electrode assembly 1.10 comprises a working electrode 1.10a made of platinum and a reference electrode 1.10b of standard silver chloride. A threaded plug 1.11 made of plastics material and screwed into cell block 1.3 holds the working electrode 1.10a and reference electrode 1.10b in position. A rubber sealing ring 1.11a between the side of cell block 1.3 and head of the plug 1.11 prevents leakage of sea water from the joint. The reference electrode 1.10b is recessed into a gap in plug 1.11 and the intervening space between the electrode 1.10b and plug 1.11 is filled with potassium chloride. A porous plug of P.T.F.E (polytetrafluoroethylene) (not shown) encloses the electrode 1.10b within plug 1.11. A counter electrode 1.10c slightly further along the conduit is formed of platinum. The conduit 1.9 continues to a further electrode assembly 1.12 which comprises a reference electrode 1.12a of standard silver chloride, a working electrode 1.12b of T.F.M.E. (thin film mercury electrode) on glassy carbon and slightly further along the conduit 1.9 a counter electrode of platinum. The reference electrode 1.12a and working electrode 1.12b are held in position by a threaded Plug 1.13 and rubber sealing ring 1.13a in the same manner as described for electrode assembly 1.10. The conduit 1.9 continues from the counter electrode 1.12c to the edge of cell block 1.3 where a hollow threaded connector 1.14 is screwed into the block 1.3 with a rubber sealing ring 1.14a between connector 1.14 and block 1.3. A narrow bore tube 1.15a transports the sea water outside the cell block 1.3 to a flow meter 1.16 and then via a 22V constant speed micropump 1.17 out of the apparatus.

Tube 1.2a is connected to cell block 1.3 in the same manner as tube 1.2b. A conduit 1.9a within the cell block 1.3 leads to electrode assembly 1.18 which comprises a reference electrode 1.18a of standard silver chloride, a working electrode 1.18b of T.F.M.E. on glassy carbon and a little further along the conduit 1.9a a counter electrode 1.18c of platinum. The reference electrode 1.18a and working electrode 1.18b are held in position by a threaded plug 1.19 and a rubber ring 1.19a in the same manner as described for electrode assembly 1.10. The conduit 1.19a continues to the edge of cell block 1.3 where a hollow threaded connector 1.20 and a rubber sealing ring 1.20a enable transmission of sea water along tube 1.15b which joins with tube 1.15a prior to the flow meter 1.16.

In operation sea water containing tin is introduced to the voltammeter 1.1 by narrow bore tube 1.2. The sea water is induced to flow through the voltammeter 1.1 by virtue of differential pressure produced by micropump 1.17. The rate of flow is measured by flow meter 1.16. The sea water flow is divided into two streams by virtue of the junction in tube 1.2 into capillary tubes 1.2a and 1.2b. The stream which travels along tube 1.2b passes through the resin column 1.7 which removes tin from the sea water. Prior to entering the cell block 1.3 capillary inlet tube 1.6b feeds Hg⁺⁺ ion into tube 1.2b from reservoir 1.6. The capillary inlet tube 1.6b enables Hg⁺⁺ ion to be introduced at a slow but defined rate into the cell block 1.3. The sea water passes into the cell block 1.3 and past electrode assembly 1.10. The working electrode 1.10a is held at a potential such that any residual tin in the sea water is deposited upon the working electrode 1.10a. This is known as electrochemical polishing. The sea water with added Hg⁺⁺ ion passes along the conduit 1.9 to electrode assembly 1.12. The working electrode is subjected to cyclic potential at a sweep rate of 0.1 Vs-1 over a voltage range of -1.5 to +0.3V. Within this voltage range a measurement window is chosen which coincides with the electrode stripping potential of tin. Regard should be given to the fact that the electrode stripping potential of tin will be shifted by the presence of the ligand Gallic acid. The measurement window is accordingly shifted. As the working electrode 1.12b potential becomes negative deposition occurs and Hg⁺⁺ ion in the sea water is deposited as a thin mercury film on the electrode surface followed by deposition of various other species upon the film until deposition is complete. The voltage changes, becoming positive and eventually dissolution begins to occur. When the lower end of the voltage window is reached a comparator (not shown) is triggered.

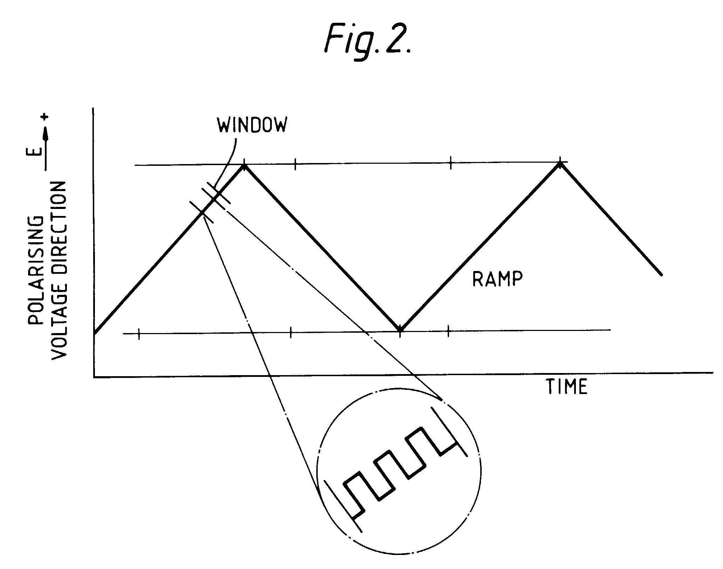

With regard to Figure 2, this in turn triggers the measurement of dissolution current to begin and imposition of a small amplitude square wave of about 100mV on the voltage ramp with the effect of considerably increasing the sweep rate of the system. The current produced by dissolution of species is measured over the entire potential window but after the major part of the chosen potential window a further comparator (not shown) switches off the imposed small amplitude square wave. Over the remaining portion of the potential window the decay of non-Faradic capacitance due to the imposed small amplitude wave is allowed to proceed and at the end of the potential window a current measurement is taken via a third comparator (also not shown). This provides the benefit of a high sweep rate and consequently enhanced dissolution current whilst removing the effects of non-Faradic capacitance caused by the high sweep rate from the enhanced signal. In summary therefore a current measurement is made before the imposition of square wave (i.e. at the first opening of the window) and then again on the closure of the window. The square wave ends sometime before the closure of the window to allow the unwanted non-Faradic capacitance contributions to decay. Because each potentiostat is run from the same waveform generator synchronism of potential for the two cells at any time is ensured. The mercury film is also stripped from the working electrode 1.12b prior to the voltage becoming negative and deposition occurring again. The sea water then flows out of the cell block 1.3 and out to waste via flow meter 1.16 and micropump 1.17.

The sea water stream which travels along tube 1.2a is supplemented with Hg⁺⁺ from reservoir 1.6 via capillary tube 1.6a and Gallic acid from reservoir 1.5 via capillary tube 1.5a. The use of capillary tubes allows addition of Hg⁺⁺ and Gallic acid at a slow but defined rate into the cell block 1.3. This supplemented sea water enters cell block 1.3 and passes along conduit 1.9a to electrode assembly 1.18 where it is simultaneously subjected to the same treatment as the sea water at electrode assembly 1.12. The presence of Gallic acid, which is a ligand, helps to bind any tin present to the mercury film at the working electrode 1.12b. Outflow from the cell block 1.3 rejoins the other sea water stream prior to flow meter 1.16 and micropump 1.17 and then passes to waste.

The readings obtained from electrode assemblies 1.12 and 1.18 are then processed by differential processing circuitry which takes account of fluctuations in pH, oxygen concentration etc in the samples as well as noise and residual non-Faradic capacitance to give a continuous measurement of the tin present in the sea water.

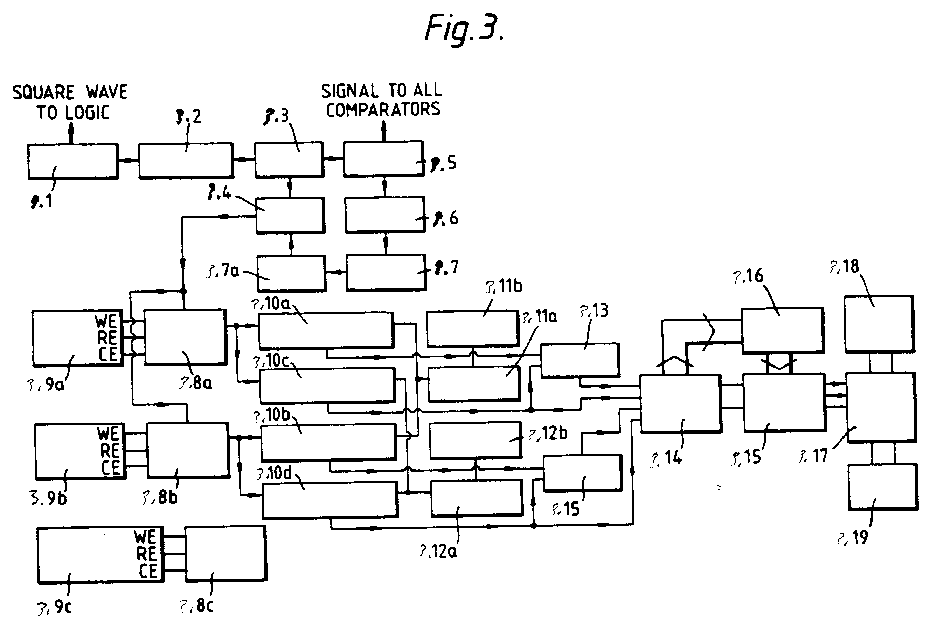

Figure 3 shows a schematic flow diagram of the inventions (ASCREV) electrochemical operation and processing.

A waveform generator 3.1 is used to produce the basic cycle potential necessary for operation of the electrodes as well as producing a square wave. The waveform generator 3.1 is connected to potential offset 3.3 via a variable gain amplifier 3.2. The output of the potential offset is fed to differential operational amplifier 3.4 and inverting amplifier 3.5. The output of amplifier 3.5 is fed to square wave comparators 3.6 and square wave logic 3.7 which from waveform generator 3.1 produces the small amplitude wave imposed upon the cycling potential within the potential window of measurement. The small amplitude square wave is switched into the ASCREV electrodes as necessary by way of relay 3.7 connected to differential operational amplifier 3.4. The output of the differential operational amplifier 3.4 is fed to 2 potentiostats 3.8a & 3.8b which respectively control the potential of the working electrodes for a cell containing no tin 3.9a and a cell containing tin 3.9b. The potential of the working electrodes is controlled with respect to the corresponding reference electrodes in response to the output of waveform generator 3.1. A further cell 3.9c used for electrochemical polishing has its potential fixed by potentiostat 3.8c. The output current of cells 3.9a & 3.9b measured over a potential window is fed via respective potentiostats 3.8a & 3.8b to lower window sample and hold circuitry 3.10a & 3.10b. The outputs are also fed to upper window sample and hold circuitry 3.10c & 3.10d. The respective lower window sample and hold circuitry 3.10a & 3.10b is linked together as is the upper sample and hold circuitry 3.10c & 3.10d. Both the lower window sample and hold circuits 3.10a & 3.10b are connected to lower window comparators 3.11b via lower window logic 3.11a.

Similarly the upper window sample and hold circuits 3.10c and 3.10d are connected to upper window comparators 3.12b via upper window logic 3.12a. The outputs of the lower window sample and hold circuit 3.10a (no tin) and upper window sample and hold circuit 3.10c (no tin) are fed to differential operational amplifier 3.13 and 16 channel multiplexing circuitry 3.14.

Similarly the output of the lower and upper window sample and hold circuits 3.10b & 3.10d (tin present) are fed to differential operational amplifier 3.15 and multiplexer 3.14. Differential analysis of the current produced by cells 3.9a and 3.9b takes place.

The multiplexer 3.14 output is directly linked to a universal asynchronous receiver transmitter 3.15 and also indirectly via an analogue to digital converter 3.16. The output of receiver transmitter which displays the is fed to a microcomputer 3.17 with screen which displays the processed ASCREV data. A printer 3.18 linked to the microcomputer 3.17 can be used to provide a hard copy of the results and a disc storage facility 3.19 is also connected to the microcomputer to provide a magnetic store of the information as required.

The present invention may by virtue of battery operation be used in the field for continuous analysis.

## Claims

1. A continuous flow anodic or cathodic stripping voltammeter (1.1) for the detection of ionic or molecular species in a sample which comprises:
a) means to separate the sample into at least two sample streams (1.2a, 1.2b);
b) a flow-through sample cell through which a sample stream flows;
c) a working electrode (1.18a) and counter electrode (1.18c) within the cell;
d) means (3.1) for cycling the working potential repetitively to produce successive deposition/dissolution cycles; and
e) means for detecting the dissolution current over a potential range characteristic of a particular ionic or molecular species of interest characterised in that the voltammeter further comprises;
a second similar flow-through sample cell through which a second sample stream flows comprising (c) - (e) wherein there is provided means (1.7) prior to the sample entering the second follow-through sample cell to remove the ionic or molecular species of interest and electrical means to compare the signals measured by the two cells.

2. A continuous flow anodic or cathodic stripping voltammeter (1.1) as claimed in claim 1 wherein there is also included in the cells a reference electrode (1.18b, 1.12b).

3. A continuous flow anodic or cathodic stripping voltammeter (1.1) as claimed in claim 1 or 2 whererin the second sample cell is set up in parallel flow with the first sample cell.

4. A continuous flow anodic or cathodic stripping voltammeter (1.1) as claimed in any one of the previous claims wherein the means (1.7) to remove the species of interest is a resin filled column.

5. A continuous flow anodic or cathodic stripping voltammeter (1.1) as claimed in any one of the previous claims wherein the continuous stripping voltammeter (1.1) further comprises means (1.10) to subject the portion of the sample which passes through the resin column or other ionic or molecular species removal means (1.7) to electrochemical polishing.

6. A continuous flow anodic or cathodic stripping voltammeter (1.1) as claimed in any one of the previous claims wherein the working electrode (1.12a, 1.18a) in both sample cells comprises a thin film mercury covered substrate.

7. A continuous flow anodic or cathodic stripping voltammeter (1.1) as claimed in claim 6 wherein the continuous stripping voltammeter (1.1) further comprises means (1.6) capable of introducing mercury or mercuric salts into the sample in order to replenish the thin film mercury surfaces of the working electrodes (1.12a, 1.18a) on deposition cycles.

8. A continuous flow anodic or cathodic stripping voltammeter (1.1) as claimed in claim 7 wherein the means (1.6) capable of introducing mercury or mercuric salts into the sample is located such that the mercury or mercuric ions are added to the sample portion entering the second cell after the resin packing (1.7).

9. A continuous flow anodic or cathodic stripping voltammeter (1.1) as claimed in claim 6 or 7 wherein the means (1.6) to add the mercury or mercuric salt to the sample comprises a deposit located on the inside of the vessels (1.2) used for transporting the sample.

10. A continuous flow anodic or cathodic stripping voltammeter (1.1) as claimed in any one of the previous claims wherein the working electrode substrate is selected from glassy carbon, boron nitride, tungsten/bronze and NAF-ion.

11. A continuous flow anodic or cathodic stripping voltammeter (1.1) as claimed in any one of the previous claims wherein there is further included a single waveform generator which applies voltages to the electrodes (1.12a, 1.2c, 1.18a, 1.18c) to ensure synchronism of potential between the electrodes (1.12a, 1.12c, 1.18a, 1.18c) at any time.

12. A continuous flow anodic or cathodic stripping voltammeter (1.1) as claimed in any one of the previous claims wherein the continuous stripping voltammeter (1.1) further comprises means (1.5) to add selected ligands to the sample to bind with a particular species in the sample.

13. A continuous flow anodic or cathodic stripping voltammeter (1.1) as claimed in claim 12 wherein the ligands are used in low concentration in the sample medium.

14. A continuous flow anodic or cathodic stripping voltammeter (1.1) as claimed in claim 12 or 13 wherein the ligand is pyrocatechol violet methylene blue or gallic acid when the species of interest in the sample is tin.

15. A continuous flow anodic or cathodic stripping voltammeter (1.1) as claimed in any one of claims 12 to 14 wherein the means (1.5) to add selected ligands to the sample comprises deposits of ligand which are located on the inside of the sample transport vessels (1.2).

16. A continuous flow anodic or cathodic stripping voltammeter (1.1) as claimed in any one of claim 12 to 15 wherein capillary tubes (1.5a, 1.6a) are used to help in controlling the concentration of mercury, mercuric salt and ligand transmitted to the sample cells.

17. A continuous flow anodic or cathodic stripping voltammeter (1.1) as claimed in any one of the previous claims wherein a the means (3.1) for cycling the working potential imposes a wave of small amplitude over part of the potential range (window) over which the current measurement takes place to increase the sweep rate.

18. A continuous flow anodic or cathodic stripping voltammeter (1.1) as claimed in claim 17 wherein the means (3.1) for cycling the working potential switches off the small amplitude wave prior to the end of the potential window to allow non-Faradic capacitance effects to decay.

19. A continuous flow anodic or cathodic stripping voltammeter (1.1) as claimed in claim 18 wherein measurements made after the small amplitude wave is switched off are used in taking account of the non-Faradic capacitance effects when the small amplitude wave is imposed.

20. A method for detecting the presence and concentration of a particular ionic or molecular species in a continuously flowing solution which comprises:
a) separating the solution into at least two sample streams (1.2a, 1.2b);
b) passing a sample stream through a first sample cell within which there is provided a working electrode (1.18a);
c) repetitively cycling a voltage applied to the electrode (1.18a) to produce deposition and dissolution or various other processes for the various ionic or molecular species upon the electrode (1.18a);
d)measuring the current produced by dissolution or removal of an ionic or molecular species over a selected potential range of the voltage cycle;
characterised in that
a second sample stream is fed through a second similar sample cell in which a repetitively cycled potential is applied to a working electrode (1.12a) to produce deposition and dissolution of ionic or molecular species present upon the electrode (1.12a) and measuring the dissolution current over the same potential range as in the first cell, the particular ionic or molecular species having been removed from the second sample stream (1.2b) prior to entering the second sample cell, the concentration of the particular ionic or molecular species being determined by a process involving subtracting the dissolution current of the second sample cell from that of the first sample cell.

## Patentansprüche

1. Anodische oder katodische Inversvoltammetrie-Vorrichtung (1.1) mit kontinuierlicher Strömung für die Erfassung von ionischen oder molekularen Spezies in einer Probe, mit:
a) einer Einrichtung zum Aufteilen der Probe in wenigstens zwei Probenströme (1.2a, 1.2b);
b) einer Durchflußprobenzelle, durch die ein Probenstrom fließt;
c) einer Arbeitselektrode (1.18a) und einer Gegenelektrode (1.18c) in der Zelle;
d) einer Einrichtung (3.1) zum wiederholten Durchlaufen des Arbeitspotentials, um aufeinanderfolgende Ablagerungs-/Auflösungsdurchläufe zu erzeugen; und
e) einer Einrichtung zum Erfassen des elektrischen Auflösungsstroms über einem Potentialbereich, der für eine besondere ionische oder molekulare Spezies von Interesse charakteristisch ist,
dadurch gekennzeichnet, daß die Voltammetrie-Vorrichtung ferner enthält:
eine zweite, ähnliche Durchflußprobenzelle, durch die ein zweiter Probenstrom fließt und die (c)-(e) enthält, in der eine Einrichtung (1.7) zum Entfernen der ionischen oder molekularen Spezies von Interesse vor dem Punkt, an dem die Probe in die zweite Durchflußprobenzelle eintritt, sowie eine elektrische Einrichtung, die die von den zwei Zellen gemessenen Signale vergleicht, vorgesehen sind.

2. Anodische oder katodische Inversvoltammetrie-Vorrichtung (1.1) mit kontinuierlicher Strömung nach Anspruch 1, in der außerdem in den Zellen eine Referenzelektrode (1.18b, 1.12b) enthalten ist.

3. Anodische oder katodische Inversvoltammetrie-Vorrichtung (1.1) mit kontinuierlicher Strömung nach Anspruch 1 oder 2, in der die zweite Probenzelle mit einer zu ersten Probenzelle parallelen Strömung angeordnet ist.

4. Anodische oder katodische Inversvoltammetrie-Vorrichtung (1.1) mit kontinuierlicher Strömung nach irgendeinem der vorangehenden Ansprüche, in der die Einrichtung (1.7) für die Entfernung der Spezies von Interesse eine mit Harz gefüllte Kolonne ist.

5. Anodische oder katodische Inversvoltammetrie-Vorrichtung (1.1) mit kontinuierlicher Strömung nach irgendeinem der vorangehenden Ansprüche, in der die kontinuierliche Inversvoltammetrie-Vorrichtung (1.1) ferner eine Einrichtung (1.10) enthält, um den Anteil der Probe, der sich durch die Harzkolonne oder durch eine andere Einrichtung (1.7) für die Entfernung ionischer oder molekularer Spezies bewegt, einem elektrochemischen Schleifen zu unterwerfen.

6. Anodische oder katodische Inversvoltammetrie-Vorrichtung (1.1) mit kontinuierlicher Strömung nach irgendeinem der vorangehenden Ansprüche, in der die Arbeitselektrode (1.12a, 1.18a) in beiden Probenzellen ein mit einem Quecksilberdünnfilm beschichtetes Substrat enthält.

7. Anodische oder katodische Inversvoltammetrie-Vorrichtung (1.1) mit kontinuierlicher Strömung nach Anspruch 6, in der die kontinuierliche Inversvoltammetrie-Vorrichtung (1.1) ferner eine Einrichtung (1.6) enthält, die Quecksilber oder Quecksilbersalze in die Probe einleiten kann, um die Dünnfilmquecksilberoberflächen der Arbeitselektroden (1.12a, 1.18a) in Ablagerungszyklen wieder aufzufüllen.

8. Anodische oder katodische Inversvoltammetrie-Vorrichtung (1.1) mit kontinuierlicher Strömung nach Anspruch 7, in der die Einrichtung (1.6), die in die Probe Quecksilber oder Quecksilbersalze einleiten kann, in der Weise angeordnet ist, daß das Quecksilber oder die Quecksilberionen demjenigen Probenanteil hinzugefügt werden, der nach der Harzauffüllung (1.7) in die zweite Zelle eintritt.

9. Anodische oder katodische Inversvoltammetrie-Vorrichtung (1.1) mit kontinuierlicher Strömung nach Anspruch 6 oder 7, in der die Einrichtung (1.6) für die Hinzufügung des Quecksilbers oder des Quecksilbersalzes zur Probe eine Ablagerung enthält, die sich innerhalb der für den Transport der Probe verwendeten Behälter (1.2) befindet.

10. Anodische oder katodische Inversvoltammetrie-Vorrichtung (1.1) mit kontinuierlicher Strömung nach irgendeinem der vorangehenden Ansprüche, in der das Arbeitselektroden-Substrat aus Glaskohlenstoff, Bornitrid, Wolfram/Bronze und ANF-Ionen gewählt ist.

11. Anodische oder katodische Inversvoltammetrie-Vorrichtung (1.1) mit kontinuierlicher Strömung nach irgendeinem der vorangehenden Ansprüche, in der ferner ein Einzelsignalform-Generator enthalten ist, der an die Elektroden (1.12a, 1.12c, 1.18a. 1.18c) Spannungen anliegt, um die Synchronizität des Potentials zwischen den Elektroden (1.12a, 1.12c, 1.18a, 1.18c) in jedem beliebigen Zeitpunkt sicherzustellen.

12. Anodische oder katodische Inversvoltammetrie-Vorrichtung (1.1) mit kontinuierlicher Strömung nach irgendeinem der vorangehenden Ansprüche, in der die kontinuierliche Inversvoltammetrie-Vorrichtung (1.1) ferner eine Einrichtung (1.5) enthält, um ausgewählte Liganden der Probe hinzuzufügen, damit sie sich mit einer besonderen Spezies in der Probe verbinden.

13. Anodische oder katodische Inversvoltammetrie-Vorrichtung (1.1) mit kontinuierlicher Strömung nach Anspruch 12, in der die Liganden im Probenmedium in niedriger Konzentration verwendet werden.

14. Anodische oder katodische Inversvoltammetrie-Vorrichtung (1.1) mit kontinuierlicher Strömung nach Anspruch 12 oder 13, in der der Ligand Brenzcatechinviolettmethylenblau oder Gallussäure ist, wenn die Spezies von Interesse in der Probe Zinn ist.

15. Anodische oder katodische Inversvoltammetrie-Vorrichtung (1.1) mit kontinuierlicher Strömung nach irgendeinem der Ansprüche 12 bis 14, in der die Einrichtung (1.5) für die Hinzufügung ausgewählter Liganden zur Probe Ligandenablagerungen enthält, die sich innerhalb der Proben-Transportbehälter (1.2) befinden.

16. Anodische oder katodische Inversvoltammetrie-Vorrichtung (1.1) mit kontinuierlicher Strömung nach irgendeinem der Ansprüche 12 bis 15, in der Kapillarrohre (1.5a, 1.6a) verwendet werden, um die Steuerung der Konzentration des Quecksilbers, des Quecksilbersalzes und des Liganden, die zu den Probenzellen transportiert werden, zu unterstützen.

17. Anodische oder katodische Inversvoltammetrie-Vorrichtung (1.1) mit kontinuierlicher Strömung nach irgendeinem der vorangehenden Ansprüche, in der die Einrichtung (3.1) zum Durchlaufen des Arbeitspotentials eine Welle mit kleiner Amplitude über einem Teil des Potentialbereichs (Fenster), in dem die Messung des elektrischen Stroms erfolgt, anlegt, um die Wobbelfrequenz zu erhöhen.

18. Anodische oder katodische Inversvoltammetrie-Vorrichtung (1.1) mit kontinuierlicher Strömung nach Anspruch 17, in der die Einrichtung (3.1) zum Durchlaufen des Arbeitspotentials die Welle mit kleiner Amplitude vor dem Ende des Potentialfensters abschaltet, um ein Abfallen von nichtfaradayischen Kapazitätseffekten zu ermöglichen.

19. Anodische oder katodische Inversvoltammetrie-Vorrichtung (1.1) mit kontinuierlicher Strömung nach Anspruch 18, in der Messungen, die nach dem Abschalten der Welle mit kleiner Amplitude ausgeführt werden, verwendet werden, um die nichtfaradyischen Kapazitätseffekte zu berücksichtigen, wenn die Welle mit kleiner Amplitude angelegt wird.

20. Verfahren zum Erfassen des Vorhandenseins und der Konzentration einer besonderen ionischen oder molekularen Spezies in einer kontinuierlich fließenden Lösung, das enthält:
a) Aufteilen der Lösung in wenigstens zwei Probenströme (1.2a, 1.2b);
b) Schicken eines Probenstroms durch eine erste Probenzelle, in der eine Arbeitselektrode (1.18a) vorgesehen ist;
c) wiederholt Durchlaufen einer an die Elektrode (1.18a) angelegten Spannung, um Ablagerungs- und Auflösungsprozesse oder verschiedene andere Prozesse für die verschiedenen ionischen oder molekularen Spezies an der Elektrode (1.18a) zu erzeugen;
d) Messen des durch die Auflösung oder die Entfernung einer ionischen oder molekularen Spezies erzeugten elektrischen Stroms über einem ausgewählten Potentialbereich des Spannungszyklus;
dadurch gekennzeichnet, daß
ein zweiter Probenstrom durch eine zweite, ähnliche Probenzelle geschickt wird, in der ein wiederholt durchlaufenes Potential an eine Arbeitselektrode (1.12a) angelegt wird, um die Ablagerung und die Auflösung von an der Elektrode (1.12a) vorhandenen ionischen oder molekularen Spezies zu erzeugen, und Messen des Auflösungsstroms über demselben Potentialbereich wie in der ersten Zelle, wobei die besondere ionische oder molekulare Spezies aus dem zweiten Probenstrom (1.2b) vor dessen Eintritt in die zweite Probenzelle entfernt worden ist, wobei die Konzentration der besonderen ionischen oder molekularen Spezies durch einen Prozeß bestimmt wird, der die Subtraktion des elektrischen Auflösungsstroms der zweiten Probenzelle von demjenigen der ersten Probenzelle enthält.

## Revendications

1. Voltamètre (1.1) à décollement anodique ou cathodique à circulation continue, destiné à la détection d'espèces ioniques ou moléculaires dans un échantillon, comprenant :
a) un dispositif de séparation d'échantillon en au moins deux courants d'échantillon (1.2a, 1.2b),
b) une cellule d'échantillon à circulation dans laquelle s'écoule un courant d'échantillon,
c) une électrode de travail (1.18a) et une électrode auxiliaire (1.18c) placées dans la cellule,
d) un dispositif (3.1) de variation cyclique du potentiel de travail de manière répétée afin que des cycles successifs de dépôt-dissolution soient produits, et
e) un dispositif de détection du courant de dissolution dans une piage de potentiel caractéristique d'une espèce ionique ou moléculaire particulière intéressante le voltamètre étant en outre caractérisé en ce qu'il comprend :
une seconde cellule d'échantillon analogue à circulation dans laquelle s'écoule un second courant d'échantillon et comprenant des dispositifs (c à e), et un dispositif (1.7) est incorporé avant l'entrée de l'échantillon dans la seconde cellule d'échantillon à circulation de manière que l'espèce ionique ou moléculaire intéressante soit retirée, et
un dispositif électrique de comparaison des signaux mesurés par les deux cellules.

2. Voltamètre (1.1) à décollement anodique ou cathodique à circulation continue selon la revendication 1, dans lequel une électrode de référence (1.18b, 1.12b) est aussi incorporée aux cellules.

3. Voltamètre (1.1) à décollement anodique ou cathodique à circulation continue selon la revendication 1 ou 2, dans lequel la seconde cellule d'échantillon est montée afin qu'elle assure une circulation en parallèle avec la première cellule d'échantillon.

4. Voltamètre (1.1) à décollement anodique ou cathodique à circulation continue selon l'une quelconque des revendications précédentes, dans lequel le dispositif (1.7) destiné à retirer l'espèce intéressante est une colonne chargée d'une résine.

5. Voltamètre (1.1) à décollement anodique ou cathodique à circulation continue selon l'une quelconque des revendications précédentes, dans lequel le voltamètre (1.1) à décollement continu comporte en outre un dispositif (1.10) destiné à soumettre la partie de l'échantillon qui circule dans la colonne de résine ou un autre dispositif (1.7) d'extraction de l'espèce ionique ou moléculaire à un polissage électrochimique.

6. Voltamètre (1.1) à décollement anodique ou cathodique à circulation continue selon l'une quelconque des revendications précédentes, dans lequel l'électrode de travail (1.12a, 1.18a) des deux cellules d'échantillon est un substrat recouvert d'un film mince de mercure.

7. Voltamètre (1.1) à décollement anodique ou cathodique à circulation continue selon la revendication 6, dans lequel le voltamètre (1.1) à décollement continu comporte en outre un dispositif (1.6) capable d'introduire du mercure ou des sels mercuriques dans l'échantillon pour le renouvellement des surfaces du film mince de mercure des électrodes de travail (1.12a, 1.18a) lors des cycles de dépôt.

8. Voltamètre (1.1) à décollement anodique ou cathodique à circulation continue selon la revendication 7, dans lequel le dispositif (1.6) capable d'introduire du mercure ou des sels mercuriques dans l'échantillon est disposé de manière que le mercure ou les ions mercuriques soient ajoutés à la partie de l'échantillon entrant dans la seconde cellule après le garnissage de résine (1.7).

9. Voltamètre (1.1) à décollement anodique ou cathodique à circulation continue selon la revendication 6 ou 7, dans lequel le dispositif (1.6) d'addition du mercure ou du sel mercurique à l'échantillon comporte un dépôt placé à l'intérieur des récipients (1.2) utilisés pour le transport de l'échantillon.

10. Voltamètre (1.1) à décollement anodique ou cathodique à circulation continue selon l'une quelconque des revendications précédentes, dans lequel le substrat d'électrode de travail est choisi parmi le carbone vitreux, le nitrure de bore, le bronze au tungstène et le "NAF-ion".

11. Voltamètre (1.1) à décollement anodique ou cathodique à circulation continue selon l'une quelconque des revendications précédentes, qui comporte en outre un générateur d'une forme d'onde unique qui applique des tensions aux électrodes (1.12a, 1.12c, 1.18a, 1.18c) destinées à assurer le synchronisme des potentiels entre les électrodes (1.12a, 1.12c, 1.18a, 1.18c) à tout moment.

12. Voltamètre (1.1) à décollement anodique ou cathodique à circulation continue selon l'une quelconque des revendications précédentes, dans lequel le voltamètre (1.1) à décollement continu comporte en outre un dispositif (1.5) destiné à ajouter des ligands choisis à l'échantillon de manière qu'une espèce particulière présente dans l'échantillon soit liée.

13. Voltamètre (1.1) à décollement anodique ou cathodique à circulation continue selon la revendication 12, dans lequel les ligands sont utilisés à faible concentration dans le milieu échantillon.

14. Voltamètre (1.1) à décollement anodique ou cathodique à circulation continue selon la revendication 12 ou 13, dans lequel le ligand est le violet de pyrocatéchol, le bleu de méthylène ou l'acide gallique, lorsque l'espèce intéressante dans l'échantillon est l'étain.

15. Voltamètre (1.1) à décollement anodique ou cathodique à circulation continue selon l'une quelconque des revendications 12 à 14, dans lequel le dispositif (1.5) destiné à ajouter des ligands choisis à l'échantillon comprend des dépôts de ligands placés à l'intérieur des récipients (1.2) de transport d'échantillons.

16. Voltamètre (1.1) à décollement anodique ou cathodique à circulation continue selon l'une quelconque des revendications 12 à 15, dans lequel des tubes capillaires (1.5a, 1.6a) sont utilisés pour faciliter le réglage de la concentration du mercure, du sel mercurique et du ligand transmis aux cellules d'échantillon.

17. Voltamètre (1.1) à décollement anodique ou cathodique à circulation continue selon l'une quelconque des revendications précédentes, dans lequel un dispositif (3.1) de commande cyclique du potentiel de travail applique une onde de faible amplitude dans une partie de la plage de potentiel (fenêtre) dans laquelle la mesure du courant est réalisée afin que la vitesse de balayage soit accrue.

18. Voltamètre (1.1) à décollement anodique ou cathodique à circulation continue selon la revendication 17, dans lequel le dispositif (3.1) de commande cyclique du potentiel de travail supprime l'onde de petite amplitude avant la fin de la fenêtre de potentiel afin que les effets capacitifs non faradiques puissent disparaître.

19. Voltamètre (1.1) à décollement anodique ou cathodique à circulation continue selon la revendication 18, dans lequel des mesures effectuées après l'arrêt de l'onde de petite amplitude sont utilisées pour la prise en considération des effets capacitifs non faradiques au moment où l'onde de petite amplitude était superposée.

20. Procédé de détection de la présence et de la concentration d'une espèce ionique ou moléculaire particulière dans une solution qui circule de façon continue, le procédé comprenant :
a) la séparation de la solution en au moins deux courants d'échantillon (1.2a, 1.2b),
b) le passage d'un courant d'échantillon dans une première cellule d'échantillon dans laquelle est placée une électrode de travail (1.18a),
c) la répétition cyclique d'une tension appliquée à l'électrode (1.18a) afin qu'un dépôt et une dissolution ou diverses autres opérations agissant sur diverses espèces ioniques ou moléculaires soient produites sur l'électrode (1.18a), et
d) la mesure du courant produit par la dissolution ou l'extraction d'une espèce ionique ou moléculaire dans une plage choisie de potentiel du cycle de tension,
caractérisé en ce que
un second courant d'échantillon est transmis dans une seconde cellule analogue d'échantillon dans laquelle un potentiel répété de manière cyclique est appliqué à une électrode de travail (1.12a) pour la production d'un dépôt et d'une dissolution d'une espèce ionique ou moléculaire présente sur l'électrode (1.12a), et la mesure du courant de dissolution dans la même plage de potentiel que dans la première cellule, l'espèce ionique ou moléculaire particulière ayant été retirée du second courant d'échantillon (1.2b) avant l'entrée dans la seconde cellule d'échantillon, la concentration de l'espèce ionique ou moléculaire particulière étant déterminée par une opération qui comprend la soustraction du courant de dissolution de la seconde cellule d'échantillon de celui de la première cellule d'échantillon.
